(19) **Europäisches Patentamt European Patent Office Office européen des brevets**

(11) **EP 4 539 324 A1**

(12) **EUROPEAN PATENT APPLICATION**

(43) Date of publication:
16.04.2025 Bulletin 2025/16

(21) Application number: 23202323.4

(22) Date of filing: 09.10.2023

(51) International Patent Classification (IPC):
$H02M\ 3/335^{(2006.01)}$    $H05B\ 45/385^{(2020.01)}$

(52) Cooperative Patent Classification (CPC):
H02M 1/0058; H02M 1/0009; H02M 3/01;
H02M 3/33571; H05B 45/382; H05B 45/385

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Tridonic GmbH & Co KG
6851 Dornbirn (AT)

(72) Inventor: **Schneider, Miguel Philipp**
6851 Dornbirn (AT)

(74) Representative: **Rupp, Christian**
**Mitscherlich PartmbB**
**Patent- und Rechtsanwälte**
**Karlstraße 7**
**80333 München (DE)**

(54) **RESONANT HYBRID FLYBACK CONVERTER FOR A LIGHT SOURCE, AND LUMINAIRE**

(57)    Disclosed is a resonant hybrid flyback converter (1) for a light source (2). The converter (1) comprises a transformer (101, 102), comprising a primary-side inductance (101, $L_p$) and a secondary-side inductance (102, $L_s$). The converter (1) further comprises a high-side switch (103) and a low-side switch (104), connected in series between an input electric potential and a primary-side ground electric potential of the converter (1). The converter (1) further comprises a resonant tank circuit (101, 105), connected in series between a common electric potential of the switches (103, 104) and the primary-side ground electric potential. The resonant tank circuit (101, 105) comprises the primary-side inductance (101, $L_p$). The converter (1) further comprises a first sensing circuit (110-113); a second sensing circuit (120-125); and a control circuit (130). The control circuit (130) is configured to sense, via the first sensing circuit (110-113), a first voltage (140) being indicative of a resonant current (141, $I_{res}$) through the primary-side inductance (101, $L_p$). The control circuit (130) is further configured to sense, via the second sensing circuit (120-125), a second voltage (142) being indicative of a magnetizing current (143, $I_{mag}$) through the primary-side inductance (101, $L_p$). The control circuit (130) is further configured to estimate a current (146, $I_{LEDest}$) through the light source (2) in accordance with the first voltage (140) and the second voltage (142). The control circuit (130) is further configured to regulate the current (148, $I_{LED}$) through the light source (2) in accordance with a setpoint value (147, $I_{LEDref}$) and the estimated current (146, $I_{LEDest}$) through the light source (2). This avoids a sensing of the current (148, $I_{LED}$) through the light source (2) and an associated signal transfer across a SELV barrier of the converter (1).

FIG. 3

**EP 4 539 324 A1**

## Description

## Technical Field

The present disclosure relates generally to the field of lighting technology, and in particular to a resonant hybrid flyback converter implementing a primary-side current sensing, and to a luminaire comprising the converter.

## Background Art

In resonant hybrid flyback converters, a direct current (DC) input voltage is intermittently applied across a resonant tank circuit. The resonant tank circuit may, for example, comprise a transformer's main inductance and leakage inductance (or a separate resonance choke) and a resonance capacitance in series.

An on-time control of a high-side switch of the switching bridge may be deployed for regulation (i.e., closed-loop control) of a load current of the converter in accordance with corresponding setpoint and measurement values. A sensing of the latter typically involves a relatively expensive signal transfer across a safety extra low voltage (SELV) barrier of the converter.

## Summary

It is an object to overcome the above-mentioned and other drawbacks.

The foregoing and other objects are achieved by the features of the independent claims. Further implementation forms are apparent from the dependent claims, the description and the figures.

According to a first aspect, a resonant hybrid flyback converter is provided for a light source. The converter comprises a transformer, comprising a primary-side inductance and a secondary-side inductance. The converter further comprises a high-side switch and a low-side switch, connected in series between an input electric potential and a primary-side ground electric potential of the converter. The converter further comprises a resonant tank circuit, connected in series between a common electric potential of the switches and the primary-side ground electric potential. The resonant tank circuit comprises the primary-side inductance. The converter further comprises a first sensing circuit; a second sensing circuit; and a control circuit. The control circuit is configured to sense, via the first sensing circuit, a first voltage being indicative of a resonant current through the primary-side inductance. The control circuit is further configured to sense, via the second sensing circuit, a second voltage being indicative of a magnetizing current through the primary-side inductance. The control circuit is further configured to estimate a current through the light source in accordance with the first voltage and the second voltage. The control circuit is further configured to regulate the current through the light source in accordance with a setpoint value and the estimated current through the light source.

The first sensing circuit may comprise a shunt resistance (or sense transformer), connected in series to the primary-side inductance.

The second sensing circuit may comprise an integration resistance in series with an integration capacitance, connected in parallel to the primary-side inductance.

The shunt resistance, the integration resistance, the integration capacitance and a main inductance of the primary-side inductance may be designed to satisfy $R_{shunt} = L_m / (R_{int} \times C_{int})$.

A common electrical potential of the primary-side inductance and the shunt resistance may be connected to a first sensing terminal of the control circuit. For sensing, via the first sensing circuit, the first voltage being indicative of the resonant current through the primary-side inductance, the control circuit may further be configured to sense the first voltage by sampling the first sensing terminal.

A common electric potential of the integration resistance and the integration capacitance may be connected to a second sensing terminal of the control circuit. For sensing, via the second sensing circuit, the second voltage being indicative of the magnetizing current through the primary-side inductance, the control circuit may further be configured to sense the second voltage by sampling the second sensing terminal.

For estimating the current through the light source in accordance with the first voltage and the second voltage, the control circuit may further be configured to determine a difference of the sensed first voltage and the sensed second voltage by sampling the sensed first voltage upon a zero-crossing of the sensed second voltage to positive values.

The first sensing circuit may further comprise a first offset resistance, connected between the common electrical potential of the primary-side inductance and the shunt resistance, and a constant current source of the control circuit; and a first filter resistance and a first filter capacitance, connected in series between a common electric potential of the first offset resistance and the constant current source, and the primary-side ground electric potential. A common electric potential of the first filter resistance and the first filter capacitance may be connected to a first sensing terminal of the control circuit. For sensing, via the first sensing circuit, the first voltage being indicative of the resonant current through the primary-side inductance, the control circuit may further be configured to offset the first voltage to a positive value range by sending a constant current of the current source through the first offset resistance; and sense the first voltage by sampling the first sensing terminal.

The second sensing circuit may further comprise a second offset resistance and a third offset resistance, connected in series between a controllable voltage source of the control circuit and the primary-side ground electric potential. A common electric potential of the second offset resistance and the third offset resistance may be connected to the common electric potential of the integration resistance and the integration capacitance. The second sensing circuit may further comprise a second filter resistance and a second filter capacitance, connected in series between the common electric potential of the second offset resistance and the third offset resistance, and the primary-side ground electric potential. The common electric potential of the second filter resistance and the second filter capacitance may be connected to a second sensing terminal of the control circuit. For sensing, via the second sensing circuit, the second voltage being indicative of the magnetizing current through the primary-side inductance, the control circuit may further be configured to offset the second voltage to correspond to the first voltage in terms of positive peak values by applying a controllable voltage of the controllable voltage source across the second offset resistance and the third offset resistance; and sense the second voltage by sampling the second sensing terminal.

For estimating the current through the light source in accordance with the first voltage and the second voltage, the control circuit may further be configured to average the sensed first voltage; average the sensed second voltage; and determine a difference of the averaged first voltage and the averaged second voltage by subtracting the latter from the former.

For estimating the current through the light source in accordance with the first voltage and the second voltage, the control circuit may further be configured to divide the difference by the shunt resistance; and multiply a resulting quotient by a turns ratio of the transformer.

According to a second aspect, a luminaire is provided, comprising a light source; and a resonant hybrid flyback converter of the first aspect for the light source.

The light source may comprise at least one light-emitting diode, LED.

## Brief Description of Drawings

The above-described aspects and implementations will now be explained with reference to the accompanying drawings, in which the same or similar reference numerals designate the same or similar elements.

The drawings are to be regarded as being schematic representations, and elements illustrated in the drawings are not necessarily shown to scale. Rather, the various elements are represented such that their function and general purpose become apparent to those skilled in the art.

    FIG. 1 illustrates a converter in accordance with the present disclosure;

    FIG. 2 illustrates electrical quantities of the converter of FIG. 1;

    FIG. 3 illustrates a converter in accordance with an implementation of the present disclosure;

    FIG. 4 illustrates a converter in accordance with an alternative implementation of the present disclosure; and

    FIG. 5 illustrates a signal processing in accordance with the implementation of FIG. 4.

## Detailed Descriptions of Drawings

In the following description, reference is made to the accompanying drawings, which form part of the disclosure, and which show, by way of illustration, specific aspects of implementations of the present disclosure or specific aspects in which implementations of the present disclosure may be used. It is understood that implementations of the present disclosure may be used in other aspects and comprise structural or logical changes not depicted in the figures. The following detailed description, therefore, is not to be taken in a limiting sense, and the scope of the present disclosure is defined by the appended claims.

For instance, it is understood that a disclosure in connection with a described method may also hold true for a corresponding apparatus or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary implementations and/or aspects described herein may be combined with each other, unless specifically noted otherwise.

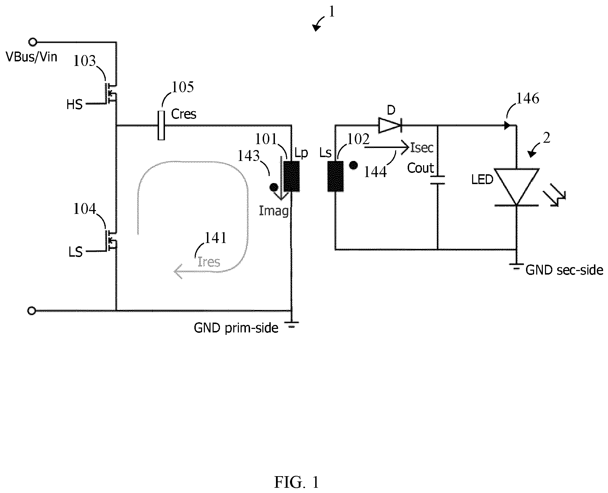

FIG. 1 illustrates a converter 1 in accordance with the present disclosure.

Technically, the converter *1* comprises a resonant hybrid flyback converter *1* for a light source *2*, which may comprise at least one light-emitting diode (LED).

A resonant hybrid flyback converter as used herein may refer to a combination of a flyback converter (wherein a square-wave voltage is applied to a primary-side inductance of a transformer) and a resonant converter (wherein the square-wave voltage is applied to a resonant tank circuit), wherein the resonant tank circuit includes the primary-side inductance.

In the non-limiting example of FIG. 1, the converter *1* and the light source *2* form part of a luminaire *1, 2*.

The converter *1* comprises a transformer *101, 102,* including a primary-side inductance *101, $L_p$* and a secondary-side inductance *102, $L_s$*. The primary-side inductance *101, $L_p$* may in turn comprise a main inductance *101', $L_m$* and a leakage inductance (not shown).

The converter *1* further comprises a high-side switch *103* and a low-side switch *104,* connected in series between an input electric potential and a primary-side ground electric potential of the converter *1*. The switches *103, 104* may form part of a switching half-bridge (HB) as shown in FIG. 1 or a full bridge (FB), for example.

The converter *1* further comprises a resonant tank circuit *101, 105,* connected in series between a common electric potential of the switches *103, 104* and the primary-side ground electric potential.

The resonant tank circuit *101, 105* comprises an LLC resonant tank including a resonance capacitance *105, $C_{res}$* in series with the primary-side inductance *101, $L_p$* or more precisely, its main inductance *101', $L_m$* and leakage inductance (not shown).

In the non-binding example of FIG. 1, the converter *1* further comprises a half-wave rectifying and smoothing circuit including an output diode *D* and an output capacitance *$C_{out}$* and connected in parallel to the secondary-side inductance *102, $L_s$*.

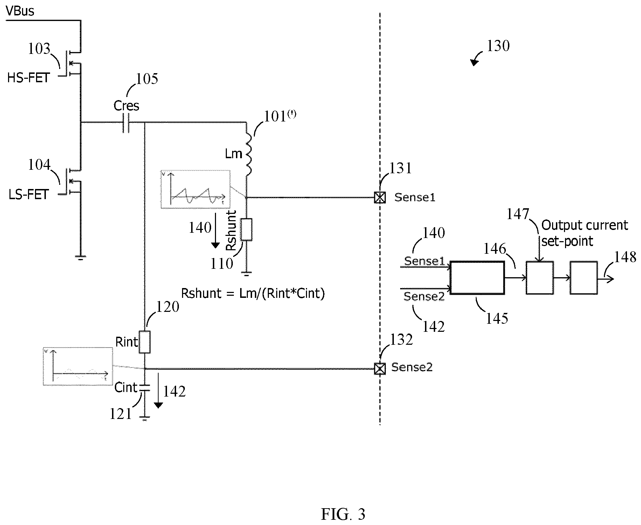

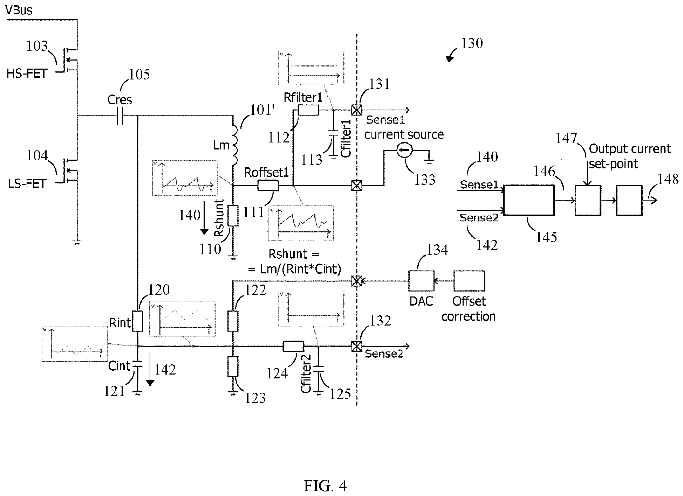

The converter *1* further comprises a first sensing circuit *110-113* and a second sensing circuit *120-125* (see FIGs. 3, 4).

The first sensing circuit *110-113* may comprise a shunt resistance *110, $R_{shunt}$* (or sense transformer), connected in series to the primary-side inductance *101, $L_p$*. whereas the second sensing circuit *120-125* may comprise an integration resistance *120, $R_{int}$* in series with an integration capacitance *121, $C_{int}$,* connected in parallel to the primary-side inductance *101, $L_p$*.

The converter *1* further comprises a control circuit *130* (see FIGs. 3, 4), such as an application-specific integrated circuit (ASIC) or the like.

As will be explained in more detail below, the control circuit *130* is configured to sense, via the first sensing circuit *110-113,* a first voltage *140* being indicative of a resonant current *141, $I_{res}$* (indicated in FIG. 1 by a circular arrow on a primary side of the transformer *101, 102*) through the primary-side inductance *101, $L_p$*.

The control circuit *130* is further configured to sense, via the second sensing circuit *120-125,* a second voltage *142* being indicative of a magnetizing current *143, $I_{mag}$* (indicated in FIG. 1 by an arrow across the primary-side inductance *101, $L_p$*) through the primary-side inductance *101, $L_p$*.

As such, the measurement of the resonant current *141, $I_{res}$* is done in aid of a shunt, located in the resonant tank, and the measurement of the magnetizing current *143, $I_{mag}$* is done by integration of the voltage across the primary-side inductance *101, $L_p$* of the transformer *101, 102* in aid of an analog integration circuit connected in parallel to the primary-side inductance *101, $L_p$*. Alternatively, the voltage across the primary-side inductance *101, $L_p$* may be measured by an auxiliary winding of the transformer *101, 102* (if any) and an integration by an operational amplifier.

To get the same signal amplitudes, the shunt resistance *110, $R_{shunt}$,* the integration resistance *120, $R_{int}$,* the integration capacitance *121, $C_{int}$* and a main inductance *101', $L_m$* of the primary-side inductance *101, $L_p$* may be designed to satisfy $R_{shunt} = L_m / R_{int} \times C_{int}$.

The control circuit *130* is further configured to estimate a current *146, $I_{LEDest}$* through the light source *2* in accordance with the first voltage *140* and the second voltage *142*.

The control circuit *130* is further configured to regulate the current *148, $I_{LED}$* through the light source *2* in accordance with a setpoint value *147, $I_{LEDref}$* and the estimated current *146, $I_{LEDest}$* through the light source *2*.

Regulation based on the estimated current *146, $I_{LEDest}$* through the light source *2* rather than the actual-/measured current *148, $I_{LED}$* through the light source *2* avoids a sensing of the latter and an associated expensive signal transfer across a SELV barrier of the converter *1*.

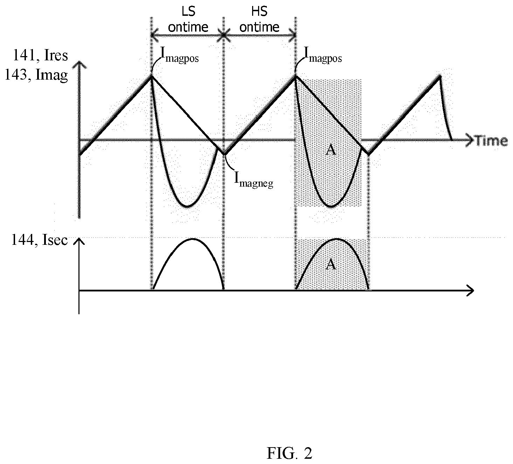

FIG. 2 illustrates electrical quantities of the converter *1* of FIG. 1 over the course of time.

An upper section shows the resonant current *141, $I_{res}$* and the magnetizing current *143, $I_{mag}$* through the primary-side inductance *101, $L_p$*, whereas a lower section depicts a current *144, $I_{sec}$* (indicated in FIG. 1 by an arrow on a secondary side of the transformer *101, 102*) through the secondary-side inductance *102, $L_s$*.

Note the fundamental characteristic of the resonant hybrid flyback converter of the linear increase of the resonant current *141, $I_{res}$* and the magnetizing current *143, $I_{mag}$* during an on-time of the high-side switch *103*. This is different from conventional resonant converters such as LLC converters, for instance. A resonant swing occurs only during an off-time of the high-side switch *103*.

Further note that resonant hybrid flyback converters differ from conventional resonant converters in a mode of operation of their switches. The latter converters are typically frequency-modulated, wherein both switches are driven alternatingly by a symmetric control signal. The former converters typically involve different control signals. For example, an on-time (conduction time duration) of a control signal of the high-side switch *103* may be regulated in accordance with a load current, whereas a control signal of the low-side switch *104* may depend on a voltage in the resonant tank circuit *101, 105* and/or an instantaneous clocking of the high-side switch *103*.

An average of the current *144, $I_{sec}$* through the secondary-side inductance *102, L$_s$* corresponds to the current *148, I$_{LED}$* through the light source *2* (i.e., load / LED current).

Note that the hatched areas respectively designated as 'A' correspond to one another in terms of size/area. It may thus be concluded that:

$$I_{sec} = I_{mag} - I_{res}$$

In other words, an amount of energy transferred to the light source *2* is determined by a difference of the magnetizing current *143, I$_{mag}$* and the resonant current *141, I$_{res}$* through the primary-side inductance *101, L$_p$*.

Note that the resonant current *141, I$_{res}$* and the magnetizing current *143, I$_{mag}$* through the primary-side inductance *101, L$_p$* are actually in alignment with one another in terms of their peak currents.

FIG. 3 illustrates a converter 1 in accordance with an implementation of the present disclosure.

It has been observed that the first voltage *140* and the second voltage *142* differ, due to an impact of the reflected secondary side current during the integration.

The observed difference is not constant and depends on the amount of energy transferred to the light source *2*. In other words, the estimated current *146, I$_{LEDest}$* through the light source *2* depends on the observed difference.

In the implementation of FIG. 3, a common electrical potential of the primary-side inductance *101, L$_p$* and the shunt resistance *110, R$_{shunt}$* may be connected to a first sensing terminal *131, Sense$_1$* of the control circuit *130*.

The control circuit *130* may further be configured to sense the first voltage *140* by sampling the first sensing terminal *131, Sense$_1$* for sensing, via the first sensing circuit *110*, the first voltage *140* being indicative of the resonant current *141, I$_{res}$* through the primary-side inductance *101, L$_p$*.

Furthermore, a common electric potential of the integration resistance *120, R$_{int}$* and the integration capacitance *121, C$_{int}$* may be connected to a second sensing terminal *132, Sense$_2$* of the control circuit *130*.

The control circuit *130* may further be configured to sense the second voltage *142* by sampling the second sensing terminal *132, Sense$_2$* for sensing, via the second sensing circuit *120-121*, the second voltage *142* being indicative of the magnetizing current *143, I$_{mag}$* through the primary-side inductance *101, L$_p$*.

In particular, the first voltage *140, V$_{Sense1}$* and the second voltage *142, V$_{Sense2}$* may respectively be sensed using sample and hold (S&H) or track and hold (T&H) circuits.

For estimating the current *146, I$_{LEDst}$* through the light source *2* in accordance with the first voltage *140* and the second voltage *142*, the control circuit *130* may further be configured to determine a difference *145, dV* of the sensed first voltage *140, V$_{Sense1}$* and the sensed second voltage *142, V$_{Sense2}$*.

$$dV = V_{Sense1} - V_{Sense2}$$

This differential measurement may take place at any point in time during an on-time of the high-side switch *103*.

Alternatively, a ground related measurement may be implemented, which has to be done at a zero crossing of the magnetizing current during the on-time of the high-side switch *103*. To this end, the control circuit *130* may further be configured to determine the difference *145, dV* of the sensed first voltage *140, V$_{Sense1}$* and the sensed second voltage *142, V$_{Sense2}$* by sampling the sensed first voltage *140, V$_{Sense1}$* upon a zero-crossing of the sensed second voltage *142, V$_{Sense2}$* to positive values:

$$dV = V_{Sense1} - 0$$

The control circuit *130* may further be configured to divide the difference *145, dV* by the shunt resistance *110, R$_{shunt}$* for a conversion from voltage to current; and to multiply a resulting quotient by a turns ratio *N* of the transformer *101, 102* for a conversion from the primary-side to the secondary-side:

$$I_{LED} = N \frac{dV}{R}$$

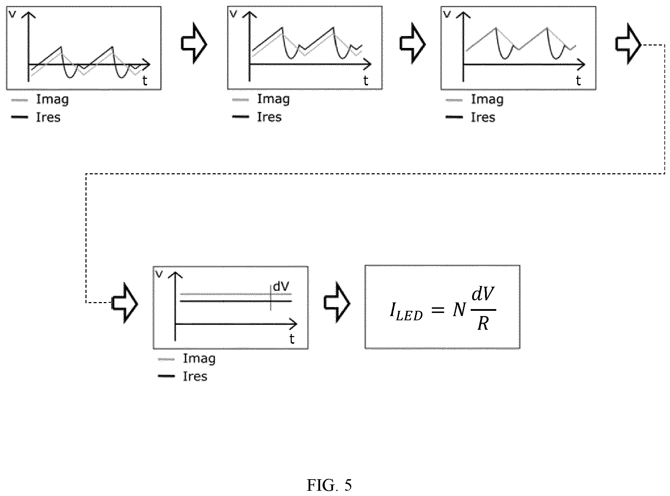

FIG. 4 illustrates a converter 1 in accordance with an alternative implementation of the present disclosure, and FIG. 5 illustrates a signal processing in accordance with the implementation of FIG. 4.

As previously mentioned, the observed difference the first voltage *140* and the second voltage *142* is not constant and depends on the amount of energy transferred to the light source *2*.

To calculate the difference between magnetizing current and resonant current, the first voltage *140* and the second voltage *142* may be matched and the required compensation be sensed.

In the implementation of FIG. 4, the first sensing circuit *110-113* may further comprise a first offset resistance *111, R$_{offset1}$*, connected between the common electrical potential of the primary-side inductance *101, L$_p$* and the shunt resistance *110, R$_{shunt}$*, and a constant current source *133* of the control circuit *130*.

The first sensing circuit *110-113* may further comprise a first filter resistance *112, R$_{filter1}$* and a first filter capacitance *113, C$_{filter1}$*, connected in series between a common electric potential of the first offset resistance *111, R$_{offset1}$* and the constant current source *133*, and the primary-side ground electric potential.

A common electric potential of the first filter resistance *112, R$_{filter1}$* and the first filter capacitance

113, $C_{filter1}$ may be connected to a first sensing terminal 131, $Sense_1$ of the control circuit 130.

The second sensing circuit 120-125 may further comprise a second offset resistance 122, $R_{offset2}$ and a third offset resistance 123, $R_{offset3}$, connected in series between a controllable voltage source 134, DAC of the control circuit 130 and the primary-side ground electric potential.

A common electric potential of the second offset resistance 122, $R_{offset2}$ and the third offset resistance 123, $R_{offset3}$ may be connected to the common electric potential of the integration resistance 120, $R_{int}$ and the integration capacitance 121, $C_{int}$.

The second sensing circuit 120-125 may further comprise a second filter resistance 124, $R_{filter2}$ and a second filter capacitance 125, $C_{filter2}$, connected in series between the common electric potential of the second offset resistance 122, $R_{offset2}$ and the third offset resistance 123, $R_{offset3}$, and the primary-side ground electric potential.

The common electric potential of the second filter resistance 124, $R_{filter2}$ and the second filter capacitance 125, $C_{filter2}$ may be connected to a second sensing terminal 132, $Sense_2$ of the control circuit 130.

For sensing, via the first sensing circuit 110, the first voltage 140 being indicative of the resonant current 141, $I_{res}$ through the primary-side inductance 101, $L_p$, the control circuit 130 may further be configured to sense the first voltage 140 by sampling the first sensing terminal 131, $Sense_1$.

For sensing, via the second sensing circuit 120-121, the second voltage 142 being indicative of the magnetizing current 143, $I_{mag}$ through the primary-side inductance 101, $L_p$, the control circuit 130 may further be configured to sense the second voltage 142 by sampling the second sensing terminal 132, $Sense_2$.

This corresponds to a first signal processing phase shown in FIG. 5 wherein the raw the first and second voltages 140, 142 are available.

For sensing, via the first sensing circuit 110-113, the first voltage 140 being indicative of the resonant current 141, $I_{res}$ through the primary-side inductance 101, $L_p$, the control circuit 130 may further be configured to offset the first voltage 140 to a positive value range by sending a constant current of the current source through the first offset resistance 111, $R_{offset1}$; and may further be configured to sense the first voltage 140 by sampling the first sensing terminal 131, $Sense_1$.

This corresponds to a second signal processing phase shown in FIG. 5 wherein a default positive shift is applied to first voltages 140.

For sensing, via the second sensing circuit 120-125, the second voltage 142 being indicative of the magnetizing current 143, $I_{mag}$ through the primary-side inductance 101, $L_p$, the control circuit 130 may further be configured to offset the second voltage 142 to correspond to the first voltage 140 in terms of positive peak values by applying a controllable voltage of the controllable voltage source 134, DAC across the second offset resistance 122, $R_{offset2}$ and the third offset resistance 123, $R_{offset3}$; and sense the second voltage 142 by sampling the second sensing terminal 132, $Sense_2$.

This corresponds to a third signal processing phase shown in FIG. 5 wherein the difference between the first and second voltages 140, 142 is actively regulated such that, the difference vanishes and the signals match.

For estimating the current 146, $I_{LEDest}$ through the light source 2 in accordance with the first voltage 140 and the second voltage 142, the control circuit 130 may further be configured to average the sensed first voltage 140; average the sensed second voltage 142; and determine a difference 145, dV of the averaged second voltage 142, $V_{Sense2}$ and the averaged first voltage 140, $V_{Sense1}$ by subtracting the latter from the former:

$$dV = V_{Sense2} - V_{Sense1}$$

This corresponds to a fourth signal processing phase shown in FIG. 5.

For estimating the current 146, $I_{LEDest}$ through the light source 2 in accordance with the first voltage 140 and the second voltage 142, the control circuit 130 may further be configured to divide the difference 145, dV by the shunt resistance 110, $R_{shunt}$, and multiply a resulting quotient by a turns ratio N of the transformer 101, 102:

$$I_{LED} = N \frac{dV}{R}$$

This corresponds to a fifth and last signal processing phase shown in FIG. 5.

The present disclosure has been described in conjunction with various implementations as examples. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. A computer program may be stored/distributed on a suitable medium, such as an optical storage medium or a solid-state medium supplied together with or as part of other hardware, but may also be distributed in other forms, such as via the Internet or other wired or wireless telecommunication systems.

**Claims**

1. A resonant hybrid flyback converter (1) for a light source (2), the converter (1) comprising

    a transformer (101, 102), comprising a primary-side inductance (101, $L_p$) and a secondary-side inductance (102, $L_s$);
    a high-side switch (103) and a low-side switch (104), connected in series between an input electric potential and a primary-side ground electric potential of the converter (1);
    a resonant tank circuit (101, 105), connected in series between a common electric potential of the switches (103, 104) and the primary-side ground electric potential, the resonant tank circuit (101, 105) comprising the primary-side inductance (101, $L_p$);
    a first sensing circuit (110-113);
    a second sensing circuit (120-125); and
    a control circuit (130), configured to

        - sense, via the first sensing circuit (110-113), a first voltage (140) being indicative of a resonant current (141, $I_{res}$) through the primary-side inductance (101, $L_p$);
        - sense, via the second sensing circuit (120-125), a second voltage (142) being indicative of a magnetizing current (143, $I_{mag}$) through the primary-side inductance (101, $L_p$);
        - estimate a current (146, $I_{LEDest}$) through the light source (2) in accordance with the first voltage (140) and the second voltage (142); and
        - regulate the current (148, $I_{LED}$) through the light source (2) in accordance with a setpoint value (147, $I_{LEDref}$) and the estimated current (146, $I_{LEDest}$) through the light source (2).

2. The converter (1) of claim 1,
    the first sensing circuit (110-113) comprising a shunt resistance (110, $R_{shunt}$), connected in series to the primary-side inductance (101, $L_p$).

3. The converter (1) of claim 2,
    the second sensing circuit (120-125) comprising an integration resistance (120, $R_{int}$) in series with an integration capacitance (121, $C_{int}$), connected in parallel to the primary-side inductance (101, $L_p$).

4. The converter (1) of claim 3,
    the shunt resistance (110, $R_{shunt}$), the integration resistance (120, $R_{int}$), the integration capacitance (121, $C_{int}$) and a main inductance (101', $L_m$) of the primary-side inductance (101, $L_p$) being designed to

satisfy $R_{shunt} = L_m / (R_{int} \times C_{int})$.

5. The converter (1) of any one of claims 1 - 4,
    a common electrical potential of the primary-side inductance (101, $L_p$) and the shunt resistance (110, $R_{shunt}$) connected to a first sensing terminal (131, $Sense_1$) of the control circuit (130);
    wherein for sensing, via the first sensing circuit (110), the first voltage (140) being indicative of the resonant current (141, $I_{res}$) through the primary-side inductance (101, $L_p$), the control circuit (130) is further configured to

        - sense the first voltage (140) by sampling the first sensing terminal (131, $Sense_1$).

6. The converter (1) of claim 5,
    a common electric potential of the integration resistance (120, $R_{int}$) and the integration capacitance (121, $C_{int}$) connected to a second sensing terminal (132, $Sense_2$) of the control circuit (130);
    wherein for sensing, via the second sensing circuit (120-121), the second voltage (142) being indicative of the magnetizing current (143, $I_{mag}$) through the primary-side inductance (101, $L_p$), the control circuit (130) is further configured to

        - sense the second voltage (142) by sampling the second sensing terminal (132, $Sense_2$).

7. The converter (1) of claim 6,
    wherein for estimating the current (146, $I_{LEDest}$) through the light source (2) in accordance with the first voltage (140) and the second voltage (142), the control circuit (130) is further configured to

        - determine a difference (145, dV) of the sensed first voltage (140) and the sensed second voltage (142) by sampling the sensed first voltage (140) upon a zero-crossing of the sensed second voltage (142) to positive values.

8. The converter (1) of any one of claims 1 - 4,
    the first sensing circuit (110-113) further comprising

        a first offset resistance (111, $R_{offset1}$), connected between the common electrical potential of the primary-side inductance (101, $L_p$) and the shunt resistance (110, $R_{shunt}$), and a constant current source (133) of the control circuit (130); and
        a first filter resistance (112, $R_{filter1}$) and a first filter capacitance (113, $C_{filter1}$), connected in series between a common electric potential of the first offset resistance (111, $R_{offset1}$) and the constant current source (133), and the primary-side ground electric potential; a common electric potential of the first filter resistance (112, $R_{filter1}$) and the first filter capacitance (113, $C_{filter1}$) connected to a first sensing terminal *(131, Sense$_1$)* of the control circuit *(130)*;
wherein for sensing, via the first sensing circuit *(110-113)*, the first voltage *(140)* being indicative of the resonant current *(141, I$_{res}$)* through the primary-side inductance *(101, L$_p$)*, the control circuit *(130)* is further configured to

- offset the first voltage *(140)* to a positive value range by sending a constant current of the current source through the first offset resistance *(111, R$_{offset1}$)*; and
- sense the first voltage *(140)* by sampling the first sensing terminal *(131, Sense$_1$)*.

9. The converter *(1)* of claim 8,
the second sensing circuit *(120-125)* further comprising

a second offset resistance *(122, R$_{offset2}$)* and a third offset resistance *(123, R$_{offset1}$)*, connected in series between a controllable voltage source *(134, DAC)* of the control circuit *(130)* and the primary-side ground electric potential, a common electric potential of the second offset resistance *(122, R$_{offset2}$)* and the third offset resistance *(123, R$_{offset2}$)* connected to the common electric potential of the integration resistance *(120, R$_{int}$)* and the integration capacitance *(121, C$_{int}$)*;
a second filter resistance *(124, R$_{filter2}$)* and a second filter capacitance *(125, C$_{filter2}$)*, connected in series between the common electric potential of the second offset resistance *(122, R$_{offset2}$)* and the third offset resistance *(123, R$_{offset1}$)*, and the primary-side ground electric potential, the common electric potential of the second filter resistance *(124, R$_{filter2}$)* and the second filter capacitance *(125, C$_{filter2}$)* connected to a second sensing terminal *(132, Sense$_2$)* of the control circuit *(130)*;
wherein for sensing, via the second sensing circuit *(120-125)*, the second voltage *(142)* being indicative of the magnetizing current *(143, I$_{mag}$)* through the primary-side inductance *(101, L$_p$)*, the control circuit *(130)* is further configured to

- offset the second voltage *(142)* to correspond to the first voltage *(140)* in terms of positive peak values by applying a controllable voltage of the controllable voltage source *(134, DAC)* across the second offset resistance *(122, R$_{offset2}$)* and the third offset resistance *(123, R$_{offset3}$)*; and
- sense the second voltage *(142)* by sampling the second sensing terminal *(132, Sense$_2$)*.

10. The converter *(1)* of claim 9,
wherein for estimating the current *(146, I$_{LEDest}$)* through the light source *(2)* in accordance with the first voltage *(140)* and the second voltage *(142)*, the control circuit *(130)* is further configured to

- average the sensed first voltage *(140)*;
- average the sensed second voltage *(142)*; and
- determine a difference *(145, dV)* of the averaged first voltage *(140)* and the averaged second voltage *(142)* by subtracting the latter from the former.

11. The converter *(1)* of claim 7 or claim 10,
wherein for estimating the current *(146, I$_{LEDest}$)* through the light source *(2)* in accordance with the first voltage *(140)* and the second voltage *(142)*, the control circuit *(130)* is further configured to

- divide the difference *(145, dV)* by the shunt resistance *(110, R$_{shunt}$)*; and
- multiply a resulting quotient by a turns ratio *(N)* of the transformer *(101, 102)*.

12. A luminaire *(1, 2)*, comprising

a light source *(2)*; and
a resonant hybrid flyback converter *(1)* of any one of claims 1 - 11 for the light source *(2)*.

13. The luminaire *(1, 2)* of claim 12,
the light source *(2)* comprising at least one light-emitting diode, LED.

FIG. 1

FIG. 2

VBus

103
HS-FET

105
Cres

104
LS-FET

101<sup>(')</sup>

Lm

131
Sense1

140

Rshunt

110

Rshunt = Lm/(Rint*Cint)

120

Rint

130

147
Output current
set-point

140
Sense1

146

148

145

Sense2

142

132
Sense2

Cint

142

121

FIG. 3

FIG. 4

FIG. 5

$$I_{LED} = N \frac{dV}{R}$$

# EUROPEAN SEARCH REPORT

Europäisches Patentamt
European Patent Office
Office européen des brevets

**Application Number**

EP 23 20 2323

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2023/144037 A1 (TRIDONIC GMBH & CO KG [AT]) 3 August 2023 (2023-08-03)<br>* page 1; figures 1, 3 *<br>-----  | 1-6,8-13 | INV.<br>H02M3/335<br>H05B45/385 |
| Y | WO 2015/103659 A2 (TRIDONIC GMBH & CO KG [AT]) 16 July 2015 (2015-07-16)<br>* page 10 - page 20; figure 2 *<br>-----  | 1-6,8-13 | |
| Y | US 8 199 534 B2 (HALBERSTADT HANS [NL]; NXP BV [NL]) 12 June 2012 (2012-06-12)<br>* column 2 - column 4; figures 1-5 *<br>-----  | 1-3 | |
| Y | WO 2018/104087 A1 (TRIDONIC GMBH & CO KG [AT]) 14 June 2018 (2018-06-14)<br>* page 9 - page 12; figures 3-6 *<br>-----  | 1-3,12,13 | |
| A | US 2020/021200 A1 (MEDINA-GARCIA ALFREDO [DE]) 16 January 2020 (2020-01-16)<br>* figures 8C, 11 *<br>-----  | 1-13 | |
| | | | **TECHNICAL FIELDS SEARCHED (IPC)**<br><br>H02M<br>H05B |

The present search report has been drawn up for all claims

| Place of search | Date of completion of the search | Examiner |
|---|---|---|
| The Hague | 11 March 2024 | van Wesenbeeck, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                   **EP 23 20 2323**

This annex lists the patent family members relating to the patent documents cited in the above-mentioned European search report.
The members are as contained in the European Patent Office EDP file on
The European Patent Office is in no way liable for these particulars which are merely given for the purpose of information.

**11-03-2024**

| Patent document cited in search report | | Publication date | Patent family member(s) | | Publication date |
|---|---|---|---|---|---|
| WO 2023144037 | A1 | 03-08-2023 | EP | 4220925 A1 | 02-08-2023 |
|  |  |  | WO | 2023144037 A1 | 03-08-2023 |
| WO 2015103659 | A2 | 16-07-2015 | AT | 14262 U1 | 15-07-2015 |
|  |  |  | EP | 3095302 A2 | 23-11-2016 |
|  |  |  | WO | 2015103659 A2 | 16-07-2015 |
| US 8199534 | B2 | 12-06-2012 | CN | 101622777 A | 06-01-2010 |
|  |  |  | EP | 2115863 A1 | 11-11-2009 |
|  |  |  | US | 2010085782 A1 | 08-04-2010 |
|  |  |  | WO | 2008104919 A1 | 04-09-2008 |
| WO 2018104087 | A1 | 14-06-2018 | AT | 17468 U1 | 15-05-2022 |
|  |  |  | DE | 102016224328 A1 | 07-06-2018 |
|  |  |  | EP | 3552458 A1 | 16-10-2019 |
|  |  |  | WO | 2018104087 A1 | 14-06-2018 |
| US 2020021200 | A1 | 16-01-2020 | CN | 110719029 A | 21-01-2020 |
|  |  |  | DE | 102018116883 A1 | 16-01-2020 |
|  |  |  | US | 2020021200 A1 | 16-01-2020 |

EPO FORM P0459

For more details about this annex : see Official Journal of the European Patent Office, No. 12/82